# EUROPÄISCHE PATENTSCHRIFT

(11) **EP 3 475 964 B1**
(45) Veröffentlichungstag und Bekanntmachung des Hinweises auf die Patenterteilung: **14.04.2021**
(21) Anmeldenummer: 17746043.3
(22) Anmeldetag: 25.07.2017
(51) Int. Cl.: H01H 33/40, H01H 3/60, H01H 3/42, F16F 9/53

(54) **VORRICHTUNG UND VERFAHREN ZUM SCHALTEN VON MITTEL- UND/ODER HOCHSPANNUNGEN MIT BESTIMMTER ANTRIEBSCHARAKTERISTIK**
DEVICE AND METHOD FOR SWITCHING MEDIUM AND/OR HIGH VOLTAGES WITH PREDEFINED DRIVE CHARACTERISTICS
DISPOSITIF ET PROCEDE POUR COMMUTER DES MOYENNES ET/OU DES HAUTES TENSIONS AVEC CARACTÉRISTIQUES D'ENTRAÎNEMENT PREDETERMINEES

(30) Priorität: 22.08.2016 DE 102016215699
(43) Veröffentlichungstag der Anmeldung: 01.05.2019
(73) Patentinhaber: Siemens Energy Global GmbH & Co. KG, 81739 München (DE)
(72) Erfinder: JENICHEN, Henry, 10553 Berlin (DE)
(86) Internationale Anmeldenummer: PCT/EP2017/068725
(87) Internationale Veröffentlichungsnummer: WO 2018/036737

(56) Entgegenhaltungen:
- EP-A2- 0 468 272
- EP-A2- 1 017 071
- WO-A1-02/44585
- DE-A1-102011 081 921

## Beschreibung

Die Erfindung betrifft eine Vorrichtung und ein Verfahren zum Schalten von Mittel- und/oder Hochspannungen, mit einem Federspeicherantrieb zum Erzeugen einer Antriebsbewegung und zum Antreiben einer kinematischen Kette. Wenigstens eine Energie-Speicherfeder und wenigstens ein Dämpfungselement zur Erzeugung einer Antriebsbewegung mit bestimmter Antriebscharakteristik sind umfasst Ein derartiger Leistungsschalter ist aus der Druckschrift EP 1 017 071 A2 bekannt.

Schaltgeräte für Mittel- und Hochspannungen, insbesondere Leistungsschalter, umfassen elektrische Kontakte mit Kontaktstücken. Bewegliche Kontaktstücke werden über Elemente einer kinematischen Kette beim Schalten bewegt, wobei die Kontakte geöffnet oder geschlossen werden. Ein Antrieb stellt die kinetische Energie bereit, welche für den Schaltvorgang benötigt wird. Mittel- und Hochspannungen, insbesondere Spannungen im Bereich von 1 kV bis 70 kV und/oder von 70 kV bis 1200 kV, können geschaltet werden, durch Öffnen oder Trennen wenigstens eines Strompfads. Dadurch können Stromerzeuger- und/oder Stromverbraucher und/oder Teile von Stromnetzen voneinander getrennt oder miteinander verbunden werden. Dies ist insbesondere notwendig beim Auftreten von Fehlerströmen in Stromnetzen.

Als Antrieb können Federspeicherantriebe verwendet werden, wobei wenigstens eine Energie-Speicherfeder die Energie zum Schalten speichert. Handkurbeln und/oder Motoren können verwendet werden, um die Energie der Energie-Speicherfeder zuzuführen, welche sie bis zum Schaltzeitpunkt speichert. Für Ein- und Mehrpolige-Schalter können wenigstens eine Einschaltfeder und wenigstens eine Ausschaltfeder vorgesehen sein, wobei Mehrpolige-Schalter wenigstens einen Antrieb pro Pol aufweisen können, oder einen gemeinsamen Antrieb für mehrere Pole. Die Kontakte können alternativ oder zusätzlich auch direkt von z. B. einem Linearmotor angetrieben werden.

Elemente einer kinematischen Kette übertragen die Bewegungsenergie vom Antrieb auf die beweglichen Kontaktstücke der elektrischen Kontakte beim Schalten. Getriebeelemente, wie z. B. Wellen und Hebel, können umfasst sein, um die Bewegungsrichtung und Kraft zu ändern, welche z. B. über eine Schaltstange auf die beweglichen Kontaktstücke übertragen werden. Für ein schnelles Schalten, insbesondere im Bereich von Millisekunden, sind große Kräfte und schnelle Bewegungen notwendig. Diese können ungebremst zu Beschädigungen an Kontaktstücken und an Elementen der kinematischen Kette führen. Ein ungebremstes aufeinanderprallen von Kontaktstücken, z. B. am Ende einer Ein-Schaltbewegung, kann zu einer Verformung bis hin zu einer irreversiblen Zerstörung der Kontaktstücke führen.

Mit Hilfe von Dämpfungselementen kann, z. B. am Ende einer Bewegung, die Bewegungsenergie absorbiert werden und die Bewegung verlangsamt werden, um z. B. eine Beschädigung oder Zerstörung von Kontaktstücken zu vermeiden. Die Dämpfungselemente können in der kinematischen Kette an unterschiedlichen Punkten angreifen, z. B. an Getriebe-Elementen und/oder der Antriebsstange. Durch die Ausgestaltung z. B. des Antriebs, von Kontaktstücken und/oder von Elementen der kinematischen Kette, insbesondere von Getriebe-Elementen, sowie durch die Verwendung von Dämpfungselementen, wird ein zeitlicher Verlauf der Antriebsbewegung bestimmt. Eine schnelle Bewegung am Anfang des Schaltvorganges und eine abgebremste, verlangsamte Bewegung am Ende des Schaltvorganges können so erzeugt werden.

Die Ausgestaltung z. B. des Antriebs, von Kontaktstücken und/oder von Elementen der kinematischen Kette, insbesondere von Getriebe-Elementen, sowie von Dämpfungselementen bestimmt den zeitlichen Verlauf der Antriebsbewegung. Die Auswahl und Anordnung der Elemente ergibt eine vorbestimmte Antriebsbewegung, welche bei jedem gleichartigen Schaltvorgang reproduzierbar erfolgt, d. h. bei jedem Ein- oder Ausschaltvorgang gleich erfolgt. Eine Steuerung oder Regelung der Antriebsbewegung abhängig z. B. eines Schaltfalls, z. B. bei Kurzschluss-Strom oder beim gezielten Zu- oder Abschalten von Strom-Erzeugern bzw. Verbrauchern, ist mit dem beschriebenen Aufbau nicht möglich. Das Design des Schaltgerätes bestimmt den zeitlichen Verlauf der Schaltbewegung, und die Schaltbewegung ist nach Fertigstellung des Schaltgerätes ohne Änderungen des Designs, d. h. äußere konstruktive Eingriffe, nicht veränderbar.

Aufgabe der vorliegenden Erfindung ist die Angabe einer Vorrichtung zum Schalten von Mittel- und/oder Hochspannungen, welche eine Änderung des zeitlichen Verlaufs der Schaltbewegung zu jedem Zeitpunkt ermöglicht. Insbesondere ist es Aufgabe der vorliegenden Erfindung eine Vorrichtung anzugeben, welche eine Einstellung eines bestimmten zeitlichen Verlaufs der Schaltbewegung insbesondere geregelt oder gesteuert zwischen Schaltvorgängen, d. h. vorbestimmt, und/oder während Schaltvorgängen ermöglicht.

Die angegebene Aufgabe wird erfindungsgemäß durch eine Vorrichtung zum Schalten von Mittel- und/oder Hochspannungen mit den Merkmalen gemäß Patentanspruch 1 und/oder durch ein Verfahren zum Erzeugen einer Antriebsbewegung mit bestimmter Antriebscharakteristik, insbesondere mit einer zuvor beschriebenen Vorrichtung, gemäß Patentanspruch 11 gelöst. Vorteilhafte Ausgestaltungen der erfindungsgemäßen Vorrichtung zum Schalten von Mittel- und/oder Hochspannungen und/oder des Verfahrens zum Erzeugen einer Antriebsbewegung mit bestimmter Antriebscharakteristik sind in den Unteransprüchen angegeben. Dabei sind Gegenstände der Hauptansprüche untereinander und mit Merkmalen von Unteransprüchen sowie Merkmale der Unteransprüche untereinander kombinierbar.

Eine erfindungsgemäße Vorrichtung zum Schalten von Mittel- und/oder Hochspannungen, mit einem Federspeicherantrieb zum Antreiben einer kinematischen Kette, umfasst wenigstens eine Energie-Speicherfeder und wenigstens ein Dämpfungselement zur Erzeugung einer Antriebsbewegung mit bestimmter Antriebscharakteristik. Das wenigstens eine Dämpfungselement ist ein aktives Dämpfungselement.

Ein aktives Dämpfungselement in einer Vorrichtung zum Schalten von Mittel- und/oder Hochspannungen, dessen Dämpfung änderbar ist, d. h. zeitlich geregelt oder gesteuert einstellbar ist, ermöglicht die Änderung des zeitlichen Verlaufs der Schaltbewegung zu jedem Zeitpunkt. Dadurch wird eine Einstellung eines bestimmten zeitlichen Verlaufs der Schaltbewegung ermöglicht, insbesondere geregelt oder gesteuert zwischen bzw. vor Schaltvorgängen, d. h. vorbestimmt, und/oder während Schaltvorgängen.

Das wenigstens eine aktive Dämpfungselement kann einen Hydraulikdämpfer umfassen. Hydraulikdämpfer sind kostengünstig, ermöglichen eine Dämpfung in einem breiten Bereich von Dämpfungskonstanten, sind räumlich gut anordenbar und langlebig. Insbesondere Öldämpfer oder Gasdämpfer können verwendet werden. Eine Einstellung der Dämpfungskonstante bzw. Dämpfung kann über die Änderung des Drucks im Dämpfer erfolgen, z. B. durch Änderung des Öl- oder Gasvolumens, oder durch Pumpen, oder Ablassen von Öl- oder Gas in z. B. ein Ausgleichsvolumen.

Wenigstens eine Steuereinheit kann umfasst sein und/oder das wenigstens eine aktive Dämpfungselement kann über eine Steuereinheit regel- oder steuerbar sein. Die Steuereinheit kann z. B. zum Erzeugen eines bestimmten Bewegungsprofils beim Schalten gesteuert die Dämpfungskonstante des Dämpfungselements zeitlich abhängig ändern, z. B. durch Pumpen von Fluid wie Öl oder Gas in das Dämpfervolumen oder durch Ablassen von Fluid über einen regelbaren Ablasshahn, oder durch Änderung des Dämpfervolumens durch räumliches Verschieben einer Volumenbegrenzung wie z. B. eines Zylinderbodens.

Sensoren und/oder Aufnehmer können umfasst sein, welche ausgebildet sind Eingangsgrößen für die Steuereinheit zu ermitteln, zum Regeln oder Steuern der Dämpfung des wenigstens einen aktiven Dämpfungselements. Dadurch kann eine Dämpfung und eine bestimmte Antriebscharakteristik beim Schalten erzeugt werden, welche abhängig von z. B. Umweltfaktoren wie Temperatur und/oder Luftdruck einstellbar ist.

Ein Hochspannungsschaltgerät, insbesondere ein Mittel- und/oder Hochspannungs-Leistungsschalter kann umfasst sein, insbesondere für einen Spannungsbereich von 1 kV bis 70 kV und/oder von 70 kV bis 1200 kV. Hochspannungs-Leistungsschalter sind gut geeignet mittlere bis hohe Leistungen zu schalten. Dabei können z. B. Vakuumröhren oder Isoliergasbasierte Leistungsschalter, wie z. B. mit SF₆ befüllte Leistungsschalter, vom Hochspannungsschaltgerät umfasst sein.

Das wenigstens eine aktive Dämpfungselement kann im Federspeicherantrieb, insbesondere in einem gemeinsamen Gehäuse mit der Energie-Speicherfeder bzw. Antriebsfeder, angeordnet sein. Dies ermöglicht eine kompakte Bauform der Vorrichtung zum Schalten von Mittel- und/oder Hochspannungen. Ein aktives Dämpfungselement kann auch alternativ oder zusätzlich an anderen Positionen der kinematischen Kette angeordnet sein, z. B. an Getriebeelementen und/oder der Antriebsstange. Abhängig von räumlichen und kinematischen Erfordernissen kann die Anordnung von aktiven Dämpfungselementen erfolgen.

Der Federspeicherantrieb kann wenigstens eine Energie-Speicherfeder für eine Einschaltbewegung umfassen und/oder wenigstens eine Energie-Speicherfeder für eine Ausschaltbewegung umfassen.

Dabei kann jede Energie-Speicherfeder des Federspeicherantriebs jeweils wenigstens ein aktives Dämpfungselement aufweisen. Dadurch ist eine unabhängige, gezielte Dämpfung von z. B. Ein- und Ausschaltbewegung möglich.

Die Energie-Speicherfedern des Federspeicherantriebs können alternativ ein gemeinsames aktives Dämpfungselement aufweisen. Dadurch können Kosten und Bauraum eingespart werden, und die aktive Einstellung der Dämpfung des Dämpfungselements ermöglicht eine bestimmte Änderung der Dämpfung bei Einschaltbewegung und Ausschaltbewegung. Für die Einschaltbewegung und die Ausschaltbewegung kann die optimale Dämpfung vorbestimmt oder während des Schaltens eingestellt werden. Dadurch ist z. B. auch bei Verwendung von nur einer Feder für Ein- und Ausschaltbewegung, eine unterschiedliche Bewegungscharakteristik für den Ein- und Ausschaltvorgang erzeugbar.

Die Vorrichtung kann ein elektrisch isolierendes Fluid umfassen, insbesondere eine Flüssigkeit und/oder ein Gas, insbesondere SF₆. Die Vorrichtung, insbesondere mit dem wenigstens einen Hochspannungsschaltgerät, kann mit dem elektrisch isolierendem Fluid, insbesondere einer Flüssigkeit und/oder einem Gas, insbesondere SF₆, befüllt sein bzw. das Hochspannungsschaltgerät kann damit befüllt sein.

Ein erfindungsgemäßes Verfahren zum Erzeugen einer Antriebsbewegung mit bestimmter Antriebscharakteristik, insbesondere unter Verwendung einer zuvor beschriebenen Vorrichtung, umfasst, dass in einem Federspeicherantrieb die Antriebsbewegung erzeugt wird und über Elemente einer kinematische Kette übertragen wird. Wenigstens eine Energie-Speicherfeder und wenigstens ein Dämpfungselement bewirken die bestimmte Antriebscharakteristik. Die Dämpfung erfolgt durch das wenigstens eine Dämpfungselement aktiv, insbesondere abhängig von Umweltgrößen und/oder der Art des Schaltfalls.

Die Dämpfung des wenigstens einen Dämpfungselements kann abhängig von Temperatur, Druck, Art des Schaltfalls, insbesondere Verlauf eines Kurzschlusses, eingestellt werden.

So können z. B. Änderungen der Federkonstante bei Temperaturänderungen durch aktive Änderung der Dämpfung ausgeglichen werden, um beim Schalten gleiche Antriebsbewegungen zu erzeugen bei veränderten Umwelteinflüssen. Für unterschiedliche Schaltfälle, z. B. im Kurzschlussfall oder bei vorgeplantem Abschalten von Netzelementen wie z. B. Verbrauchern, Übertragungsleitungen und/oder Strom-Erzeugern, z. B. zur Wartung, können unterschiedliche zeitliche Verläufe des Abschaltens realisiert werden. So kann z. B. ein Schaltvorgang bei Kurzschluss sehr schnell, insbesondere im Millisekundenbereich erfolgen, und bei einer geplanten Abschaltung langsamer, um z. B. Kontaktstücke vor hohem Verschleiß zu bewahren und/oder im Netz einen gezielten, langsameren Spannungsabfall zu erzeugen.

Ein zeitlicher Verlauf des Schaltens und/oder der Antriebsbewegung kann durch Änderung der Dämpfung des wenigstens einen Dämpfungselements während des Schaltens und/oder während der Antriebsbewegung geregelt oder gesteuert werden, insbesondere durch eine Steuereinheit. Die Antriebsbewegung kann dadurch optimiert, unterschiedlich z. B. für Ein- und Ausschaltvorgänge erfolgen. Die Antriebsbewegung mit bestimmter Charakteristik kann gewünschte zeitliche Spannungsabfallverläufe in den angeschlossenen Leitungen ermöglichen, und/oder kann während des Schaltvorgangs für unterschiedliche Schaltphasen wie z. B. Öffnen/Schließen eines Lichtbogenkontakts oder Öffnen/Schließen eines Nennstromkontakts optimiert erfolgen. Komponenten, z. B. in einem Getriebe, können eingespart werden, da statt über Getriebeelemente eine Steuerung des zeitlichen Verlaufs der Schaltbewegung über das aktive Dämpfungselement erfolgt.

Eine Antriebsbewegung mit einer vorbestimmten Antriebscharakteristik kann durch Einstellung der Dämpfung des wenigstens einen Dämpfungselements insbesondere geregelt oder gesteuert erzeugt werden, insbesondere abhängig von Eingangsgrößen ermittelt von Sensoren und/oder Aufnehmern, mit Hilfe einer Steuereinheit, insbesondere abhängig von Temperatur, Druck, Spannung und/oder Strom.

Eine Anpassung der Antriebscharakteristik kann in Echtzeit erfolgen, durch Einstellung der Dämpfung des wenigstens einen Dämpfungselements.

Die Vorteile des erfindungsgemäßen Verfahrens zum Erzeugen einer Antriebsbewegung mit bestimmter Antriebscharakteristik, insbesondere mit einer zuvor beschriebenen Vorrichtung, nach Anspruch 11 sind analog den zuvor beschriebenen Vorteilen der Vorrichtung zum Schalten von Mittel- und/oder Hochspannungen nach Anspruch 1 und umgekehrt.

Im Folgenden werden Ausführungsbeispiele der Erfindung schematisch in der einzigen Figur dargestellt und nachfolgend näher beschrieben.

### Dabei zeigt die

- Figur: schematisch eine erfindungsgemäße Vorrichtung 1 zum Schalten von Mittel- und/oder Hochspannungen, mit einem aktiven Dämpfungselement 10.

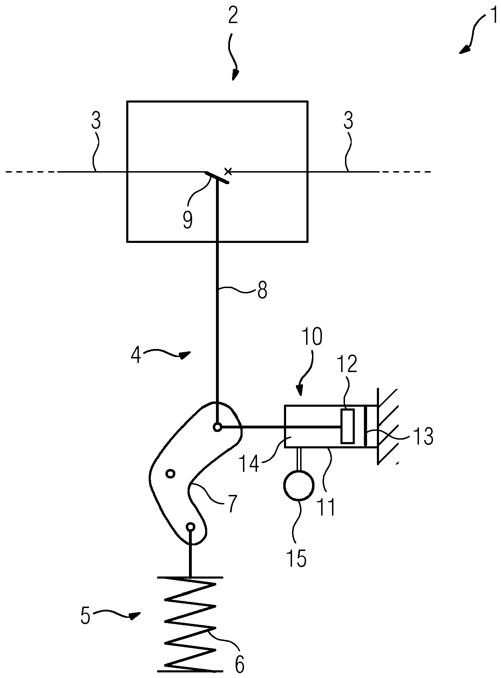

In Figur 1 ist schematisch eine erfindungsgemäße Vorrichtung zum Schalten von Mittel- und/oder Hochspannungen dargestellt, mit einem Hydraulikdämpfer als aktivem Dämpfungselement 10. Die Vorrichtung 1 umfasst einen Leistungsschalter 2 mit elektrischen Anschlüssen 3. An den Anschlüssen können insbesondere Stromleitungen für ein Stromnetz, elektrische Verbraucher und/oder Stromerzeuger angeschlossen sein. Der Leistungsschalter 2 umfasst einen elektrischen Kontakt 9, welcher ausgebildet ist eine elektrische Strombahn zu trennen oder zu verbinden. Die Elemente des elektrischen Kontakts 9, wie z. B. Nennstromkontaktstücke und/oder Lichtbogenkontaktstücke, sind der Einfachheit halber in der Figur nicht dargestellt.

Zum Schalten des Leistungsschalters 9 werden wenigstens ein bewegliches Kontaktstück oder mehrere bewegliche Kontaktstücke von oder in eine geschlossene oder offene Position der Strombahn bewegt. Die Bewegungsenergie für die Bewegung der Kontaktstücke wird in einer Energie-Speicherfeder 6 eines Federspeicherantriebs 5 gespeichert, und beim Schalten wird z. B. durch Lösen einer Verklinkung der Energie-Speicherfeder 6 die gespeicherte Bewegungsenergie freigegeben. Über eine kinematische Kette 4 wird die Bewegungsenergie vom Federspeicherantrieb 5 auf die beweglichen Kontaktstücke des Kontakts 9 übertragen. Der Kontakt 9 des Leistungsschalters 2 wird geöffnet oder geschlossen, und die Strombahn über den Leistungsschalter 2 wird getrennt oder elektrisch leitend verbunden.

Die kinematische Kette 4 umfasst zur Übertragung der Bewegungsenergie insbesondere Elemente wie z. B. eine Antriebsstange 8, welche mit wenigstens einem beweglichen Kontaktstück verbunden ist, und/oder Getriebeelemente 7, wie z. B. Hebel und Wellen zum Übersetzen der Kräfte von der Antriebsfeder 6 auf die Antriebsstange 8. Dämpfungselemente 10 können zum Dämpfen der Bewegung, insbesondere am Ende eines Schaltvorgangs, z. B. an der Energie-Speicherfeder 6 und/oder an Getriebeelementen 7, und/oder an der Antriebsstange 8 und/oder direkt an beweglichen Kontaktstücken vorgesehen sein. In der Figur ist beispielhaft ein Dämpfungselement 10 an einem Getriebeelement 7, ausgebildet als Hebel, dargestellt.

Die Bewegungscharakteristiken der beweglichen Kontaktstücke, d. h. die zeitliche Änderung der Bewegung und/oder der übertragenen Kräfte für die Bewegung der Kontaktstücke, und damit verbunden der zeitliche Verlauf des Schaltvorgangs, werden insbesondere durch die Eigenschaften der Energie-Speicherfeder 6 und durch Elemente der kinematischen Kette 4, z. B. den Getriebeelementen 7, sowie Eigenschaften des Kontakts 9 bestimmt. Die Konstruktion der Vorrichtung 1, insbesondere die Auswahl und Anordnung der Elemente 6, 7, 8, 9, bestimmen die Bewegungscharakteristik beim Schalten. Mit einer bestimmten Konstruktion wird eine bestimmte Bewegungscharakteristik erzeugt, welche ohne aktives Dämpfungselement 10 bei jedem Schaltvorgang gleich ist, abgesehen von Umwelteinflüssen und einer zeitlichen Degradation von Elementen der Vorrichtung 1.

Über wenigstens ein aktives Dämpfungselement 10, wie es beispielhaft in der Figur schematisch als Hydraulikdämpfer dargestellt ist, kann die Bewegungscharakteristik zu jeder Zeit geändert werden. Eine Änderung kann vorbestimmt, d. h. vor Schaltvorgängen erfolgen. Die Änderung kann auch während des Schaltvorgangs erfolgen, und den zeitlichen Verlauf der Bewegung während des Schaltvorgangs ändern. Zur Änderung der Bewegungscharakteristik wird die Dämpfungskonstante, d. h. die Dämpfung des Dämpfungselements 10 geändert. In dem Ausführungsbeispiel, welches in der Figur dargestellt ist, umfasst das Dämpfungselement 10 als Hydraulikdämpfer ein Gehäuse 11, z. B. ein zylinderförmiges Gehäuse, in welchem beweglich ein Kolben 12, z. B. ein zylinderförmiger Kolben, angeordnet ist. Der Kolben 12 ist mit Elementen der kinematischen Kette 4 verbunden, z. B. über eine Stange mit dem Hebel 7 als Getriebeelement.

Das Gehäuse 11 des Dämpfungselements 10 ist mit einem Fluid, z. B. mit Öl oder Gas befüllt. Die Bewegung des Kolbens 12 in dem Fluid erfolgt gebremst, insbesondere abhängig der Viskosität des Fluids und/oder geometrischen Größen wie z. B. dem Abstand zwischen dem Kolben 12 und der Wandung des Gehäuses 11. Durch Änderung des Drucks im Gehäuse 11 kann die Viskosität des Fluids, und damit die Dämpfung des Dämpfungselements 10, geändert werden. Z. B. kann eine Pumpe 15 den Druck im Gehäuse 11 geregelt oder gesteuert ändern, und damit eine bestimmte Viskosität sowie Dämpfung einstellen. Alternativ oder zusätzlich können Druckausgleichsbehälter in Verbindung mit Ventilen zum Einstellen eines gewünschten Drucks verwendet werden. Eine Änderung des Drucks im Fluid kann auch, wie in der Figur dargestellt ist, durch Verschiebung einer Wandung 13, und somit Änderung des mit Fluid gefüllten Volumens 14 des Gehäuses 11, erfolgen.

Eine Änderung der Dämpfung des Dämpfungselements 13 bewirkt, über die Änderung der Bewegung des Getriebeelements 7 im Ausführungsbeispiel der Figur, eine Änderung der über die kinematische Kette 4 übertragenen Schaltbewegung. Eine Dämpfung kann vor dem Schaltvorgang für die gesamte Schaltzeit konstant eingestellt werden, oder während des Schaltens verändert werden, z. B. am Ende des Schaltvorgangs vergrößert werden, um ein Abbremsen des beweglichen Kontaktstücke am Ende des Schaltens zu erreichen. Dadurch ist eine Antriebsbewegung mit bestimmter Antriebscharakteristik bzw. Bewegungscharakteristik möglich, vorbestimmt vor dem Schalten oder änderbar während des Schaltens.

Die zuvor beschriebenen Ausführungsbeispiele können untereinander kombiniert werden und/oder können mit dem Stand der Technik kombiniert werden. So können z. B. verschiedene Arten von Dämpfungselementen 10 verwendet werden. Es können z. B. aktive hydraulische Dämpfungselemente 10, aktive Feder-Dämpfungselemente, insbesondere mit einer geregelt oder gesteuert verschiebbaren Federaufhängung, elektromagnetische Dämpfungselemente als aktive Dämpfungselemente, oder andere Arten von aktiven Dämpfungselementen, insbesondere für mechanische Energie, verwendet werden. Es kann eine unterschiedliche Zahl an aktiven Dämpfungselementen verwendet werden, insbesondere auch kombiniert mit passiven Dämpfungselementen. Eine Regelung oder Steuerung der Dämpfung, insbesondere mit einer Dämpfungskonstante abhängig von der Zeit, kann über wenigstens eine Steuerungseinrichtung, insbesondere mit einem Computer, erfolgen. Daten von Messgeräten und/oder Sensoren sowie Aufnehmer können verwendet werden für die Regelung oder Steuerung, wobei abhängig z. B. von Umweltparametern oder Arten von Schaltfällen eine Dämpfung bzw. Bewegungscharakteristik eingestellt wird.

Das oder die aktiven Dämpfungselemente 10 können an unterschiedlichen Positionen in der Vorrichtung angeordnet werden. Es können auch unterschiedliche Arten von aktiven Dämpfungselementen 10 an unterschiedlichen Postionen in der Vorrichtung und/oder an der gleichen Position angeordnet werden. Eine Dämpfung durch die aktiven Dämpfungselemente 10 kann insbesondere abhängig von der oder den Energie-Speicherfedern 5 erfolgen. So können z. B. Bewegungscharakteristiken, erzeugt durch eine Energie-Speicherfeder 5, durch die aktiven Dämpfungselemente 10 ausgeglichen werden. Insbesondere bei mehrfachem Schalten mit einer Energie-Speicherfeder 5, ohne zwischenzeitliches Spannen der Feder 5, bei welchem die Federkraft z. B. abnimmt, kann z. B. durch Verringerung der Dämpfung mit jedem Schaltvorgang, durch das aktive Dämpfungselement 10 ausgeglichen werden. Unterschiedliche Bewegungscharakteristika können insbesondere mit einer Energie-Speicherfeder 5 für Ein- und Ausschaltvorgänge erzeugt werden. Bei Verwendung von unterschiedlichen Energie-Speicherfedern 5 für das Ein- und Ausschalten kann ein aktives Dämpfungselement 10 für beide Federn 5 verwendet werden, oder jeder Energie-Speicherfeder 5 wenigstens ein aktives Dämpfungselement 10 zugeordnet sein.

### Bezugszeichenliste

- 1: Vorrichtung zum Schalten von Mittel- und/oder Hochspannungen
- 2: Leistungsschalter
- 3: elektrische Anschlüsse
- 4: kinematische Kette
- 5: Federspeicherantrieb
- 6: Energie-Speicherfeder
- 7: Getriebeelemente, z. B. Hebel und Wellen
- 8: Antriebsstange
- 9: elektrischer Kontakt
- 10: aktives Dämpfungselement
- 11: Gehäuse
- 12: Kolben
- 13: verschiebbare Wandung
- 14: Fluidvolumen, z. B. Öl- oder Gasvolumen
- 15: Pumpe

## Patentansprüche

1. Vorrichtung (1) zum Schalten von Mittel- und/oder Hochspannungen, mit einem Federspeicherantrieb (5) zum Antreiben einer kinematischen Kette (4), wobei wenigstens eine Energie-Speicherfeder (6) und wenigstens ein Dämpfungselement (10) zur Erzeugung einer Antriebsbewegung umfasst sind,
wobei das wenigstens eine Dämpfungselement (10) ein aktives Dämpfungselement (10) ist, **dadurch gekennzeichnet,**
**dass** das wenigstens eine Dämpfungselement (10) ausgebildet zur Erzeugung einer Antriebsbewegung mit bestimmter Antriebscharakteristik durch aktive Dämpfung abhängig von Umweltgrößen und/oder der Art des Schaltfalls ist.

2. Vorrichtung (1) nach Anspruch 1,
**dadurch gekennzeichnet, dass** dass das wenigstens eine aktive Dämpfungselement (10) einen Hydraulikdämpfer umfasst.

3. Vorrichtung (1) nach einem der Ansprüche 1 oder 2,
**dadurch gekennzeichnet, dass** wenigstens eine Steuereinheit umfasst ist und/oder dass das wenigstens eine aktive Dämpfungselement (10) über eine Steuereinheit regel- oder steuerbar ist.

4. Vorrichtung (1) nach Anspruch 3,
**dadurch gekennzeichnet, dass** Sensoren und/oder Aufnehmer umfasst sind, welche ausgebildet sind Eingangsgrößen für die Steuereinheit zu ermitteln, zum Regeln oder Steuern der Dämpfung des wenigstens einen aktiven Dämpfungselements (10).

5. Vorrichtung (1) nach einem der vorhergehenden Ansprüche,
**dadurch gekennzeichnet, dass** ein Hochspannungsschaltgerät, insbesondere ein Mittel- und/oder Hochspannungs-Leistungsschalter (2) umfasst ist, insbesondere für einen Spannungsbereich von 1 kV bis 70 kV und/oder von 70 kV bis 1200 kV.

6. Vorrichtung (1) nach einem der vorhergehenden Ansprüche,
**dadurch gekennzeichnet, dass** das wenigstens eine aktive Dämpfungselement (10) im Federspeicherantrieb (5), insbesondere in einem gemeinsamen Gehäuse, angeordnet ist.

7. Vorrichtung (1) nach einem der vorhergehenden Ansprüche,
**dadurch gekennzeichnet, dass** der Federspeicherantrieb (5) wenigstens eine Energie-Speicherfeder (6) für eine Einschaltbewegung umfasst und/oder wenigstens eine Energie-Speicherfeder (6) für eine Ausschaltbewegung umfasst.

8. Vorrichtung (1) nach Anspruch 7,
**dadurch gekennzeichnet, dass** jede Energie-Speicherfeder (6) des Federspeicherantriebs (5) jeweils wenigstens ein aktives Dämpfungselement (10) aufweist.

9. Vorrichtung (1) nach Anspruch 7,
**dadurch gekennzeichnet, dass** die Energie-Speicherfedern (6) des Federspeicherantriebs (5) ein gemeinsames aktives Dämpfungselement (10) aufweisen.

10. Vorrichtung (1) nach einem der vorhergehenden Ansprüche,
**dadurch gekennzeichnet, dass** ein elektrisch isolierendes Fluid umfasst ist, insbesondere eine Flüssigkeit und/oder ein Gas, insbesondere SF₆, und/oder dass die Vorrichtung, insbesondere das wenigstens eine Hochspannungsschaltgerät, mit dem elektrisch isolierendem Fluid, insbesondere einer Flüssigkeit und/oder einem Gas, insbesondere SF₆, befüllt ist.

11. Verfahren zum Erzeugen einer Antriebsbewegung mit bestimmter Antriebscharakteristik, mit einer Vorrichtung (1) nach einem der vorhergehenden Ansprüche, wobei in einem Federspeicherantrieb (5) die Antriebsbewegung erzeugt und über Elemente einer kinematische Kette (4) übertragen wird, und wenigstens eine Energie-Speicherfeder (6) und wenigstens ein Dämpfungselement (10) die bestimmte Antriebscharakteristik bewirken,
**dadurch gekennzeichnet, dass** durch das wenigstens eine Dämpfungselement (10) die Dämpfung aktiv, abhängig von Umweltgrößen und/oder der Art des Schaltfalls, erfolgt.

12. Verfahren nach Anspruch 11,
**dadurch gekennzeichnet, dass** die Dämpfung des wenigstens einen Dämpfungselements (10) abhängig von Temperatur, Druck, Art des Schaltfalls, insbesondere Verlauf eines Kurzschlusses, eingestellt wird.

13. Verfahren nach einem der vorhergehenden Ansprüche,
**dadurch gekennzeichnet, dass** ein zeitlicher Verlauf des Schaltens und/oder der Antriebsbewegung durch Änderung der Dämpfung des wenigstens einen Dämpfungselements (10) während des Schaltens und/oder während der Antriebsbewegung geregelt oder gesteuert wird, insbesondere durch eine Steuereinheit.

14. Verfahren nach einem der vorhergehenden Ansprüche,
**dadurch gekennzeichnet, dass** eine Antriebsbewegung mit einer vorbestimmten Antriebscharakteristik durch Einstellung der Dämpfung des wenigstens einen Dämpfungselements (10) insbesondere geregelt oder gesteuert erzeugt wird, insbesondere abhängig von Eingangsgrößen, ermittelt von Sensoren und/oder Aufnehmern, insbesondere abhängig von Temperatur, Druck, Spannung und/oder Strom, mit Hilfe einer Steuereinheit.

15. Verfahren nach einem der vorhergehenden Ansprüche,
**dadurch gekennzeichnet, dass** eine Anpassung der Antriebscharakteristik in Echtzeit erfolgt, durch Einstellung der Dämpfung des wenigstens einen Dämpfungselements (10).

## Claims

1. Device (1) for switching medium and/or high voltages, comprising a spring energy store drive (5) for driving a kinematic chain (4), wherein at least one energy storage spring (6) and at least one damping element (10) are included for generating a drive movement, wherein the at least one damping element (10) is an active damping element (10), **characterized in that**
the at least one damping element (10) is designed to generate a drive movement with a specific drive characteristic through active damping depending on environmental variables and/or the nature of the switching case.

2. Device (1) according to Claim 1,
**characterized in that**
the at least one active damping element (10) comprises a hydraulic damper.

3. Device (1) according to either of Claims 1 and 2, **characterized in that**
at least one control unit is included and/or **in that** the at least one active damping element (10) can be regulated or controlled via a control unit.

4. Device (1) according to Claim 3,
**characterized in that**
sensors and/or pickups are included, which are designed to determine input variables for the control unit, for regulating or controlling the damping of the at least one active damping element (10).

5. Device (1) according to one of the preceding claims,
**characterized in that**
a high-voltage switching device, in particular a medium-voltage and/or high-voltage circuit breaker (2), is included, in particular for a voltage range of from 1 kV to 70 kV and/or from 70 kV to 1200 kV.

6. Device (1) according to one of the preceding claims,
**characterized in that**
the at least one active damping element (10) is arranged in the spring energy store drive (5), in particular in a common housing.

7. Device (1) according to one of the preceding claims,
**characterized in that**
the spring energy store drive (5) comprises at least one energy storage spring (6) for a switch-on movement and/or at least one energy storage spring (6) for a switch-off movement.

8. Device (1) according to Claim 7,
**characterized in that**
each energy storage spring (6) of the spring energy store drive (5) has in each case at least one active damping element (10) .

9. Device (1) according to Claim 7,
**characterized in that**
the energy storage springs (6) of the spring energy store drive (5) have a common active damping element (10).

10. Device (1) according to one of the preceding claims,
**characterized in that**
an electrically insulating fluid is included, in particular a liquid and/or a gas, in particular SF₆, and/or **in that** the device, in particular the at least one high-voltage switching device, is filled with the electrically insulating fluid, in particular a liquid and/or a gas, in particular SF₆.

11. Method for generating a drive movement with a specific drive characteristic, in particular using a device (1) according to one of the preceding claims, wherein the drive movement is generated in a spring energy store drive (5) and is transmitted via elements in a kinematic chain (4), and at least one energy storage spring (6) and at least one damping element (10) effect the specific drive characteristic,
**characterized in that**
by virtue of the at least one damping element (10), the damping takes place actively, depending on environmental variables and/or the nature of the switching case.

12. Method according to Claim 11,
**characterized in that**
the damping of the at least one damping element (10) is adjusted depending on temperature, pressure, nature of the switching case, in particular profile of a short circuit.

13. Method according to one of the preceding claims,
**characterized in that**
a time-dependent profile of the switching and/or the drive movement is regulated or controlled by changing the damping of the at least one damping element (10) during the switching and/or during the drive movement, in particular by means of a control unit.

14. Method according to one of the preceding claims,
**characterized in that**
a drive movement with a predetermined drive characteristic is generated by adjusting the damping of the at least one damping element (10), in particular by regulation or control, in particular depending on input variables, determined by sensors and/or pickups, in particular depending on temperature, pressure, voltage and/or current, with the aid of a control unit.

15. Method according to one of the preceding claims,
**characterized in that**
adaptation of the drive characteristic takes place in real time, by adjustment of the damping of the at least one damping element (10).

## Revendications

1. Dispositif pour commuter des moyennes et/ou hautes tensions, comprenant un entraînement (5) à ressort accumulateur pour l'entraînement d'une chaîne (4) cinématique, dans lequel il y a au moins un ressort (6) accumulateur d'énergie et au moins un élément (10) d'amortissement pour la production d'un déplacement d'entraînement,
dans lequel
le au moins un élément (10) d'amortissement est un élément (10) d'amortissement actif,
**caractérisé**
**en ce que** le au moins un élément (10) d'amortissement est constitué pour la production d'un déplacement d'entraînement ayant une caractéristique d'entraînement déterminé par amortissement actif en fonction de grandeurs ambiantes et/ou du type de cas de commutation.

2. Dispositif (1) suivant la revendication 1,
**caractérisé en ce que**
le au moins un élément (10) d'amortissement actif comprend un amortisseur hydraulique.

3. Dispositif (1) suivant l'une des revendications 1 ou 2,
**caractérisé en ce que**
il y a au moins une unité de commande et/ou **en ce que** le au moins un élément (10) d'amortissement actif peut être réglé ou commandé par une unité de commande.

4. Dispositif (1) suivant la revendication 3,
**caractérisé en ce que**
il y a des capteurs et/ou des récepteurs, qui sont constitués pour déterminer des grandeurs d'entrée pour l'unité de commande pour le réglage ou la commande de l'amortissement du au moins un élément (10) d'amortissement actif.

5. Dispositif (1) suivant l'une des revendications précédentes,
**caractérisé en ce que**
il y a un appareil de commutation de haute tension, notamment un disjoncteur (2) de moyenne de tension et/ou de haute tension, notamment pour une plage de tension allant de 1 kV à 70 kV et/ou de 70 kV à 1200 kV.

6. Dispositif (1) suivant l'une des revendications précédentes,
**caractérisé en ce que**
le au moins un élément (10) d'amortissement actif est disposé dans l'entraînement (5) à ressort accumulateur, notamment dans un boîtier commun.

7. Dispositif (1) suivant l'une des revendications précédentes,
**caractérisé en ce que**
l'entraînement (5) à ressort accumulateur comprend au moins un ressort accumulateur d'énergie pour un mouvement de mise en circuit et/ou au moins un ressort (6) accumulateur d'énergie pour un mouvement de mise hors circuit.

8. Dispositif (1) suivant la revendication 7,
**caractérisé en ce que**
chaque ressort (6) accumulateur d'énergie de l'entraînement (5) à ressort accumulateur a respectivement au moins un élément (10) d'amortissement actif.

9. Dispositif (1) suivant la revendication 7,
**caractérisé en ce que**
les ressorts (6) accumulateurs d'énergie de l'entraînement (5) à ressort accumulateur ont un élément (10) d'amortissement actif commun.

10. Dispositif (1) suivant l'une des revendications précédentes,
**caractérisé en ce que**
il y a un fluide isolant du point de vue électrique, notamment un liquide et/ou un gaz, notamment du SF₆ et/ou **en ce que** le dispositif, notamment le au moins un appareil de commutation de haute tension, est rempli d'un fluide isolant du point de vue électrique, notamment d'un liquide et/ou d'un gaz, notamment de SF₆.

11. Procédé de production d'un déplacement d'entraînement ayant une caractéristique d'entraînement déterminée par un dispositif (1) suivant l'une des revendications précédentes, dans lequel on produit le déplacement d'entraînement dans un entraînement (5) à ressort accumulateur et on le transmet par des éléments d'une chaîne (4) cinématique et au moins un ressort (6) accumulateur d'énergie et au moins un élément (10) d'amortissement donne la caractéristique d'entraînement déterminée,
**caractérisé en ce que**
l'amortissement actif en fonction de grandeurs ambiantes et/ou du type de cas de commutation s'effectue par le au moins un élément (10) d'amortissement.

12. Procédé suivant la revendication 11,
**caractérisé en ce que**
l'on règle l'amortissement du au moins un élément (10) d'amortissement en fonction de la température, de la pression, du type de cas de commutation, notamment de la courbe d'un court-circuit.

13. Procédé suivant l'une des revendications précédentes,
**caractérisé en ce que**
l'on règle ou on commande, notamment par une unité de commande, la courbe en fonction du temps de la commutation et/ou du mouvement d'entraînement par variation de l'amortissement du au moins un élément (10) d'amortissement pendant la commutation et/ou pendant le mouvement d'entraînement.

14. Procédé suivant l'une des revendications précédentes,
**caractérisé en ce que**
l'on produit, notamment de manière réglée ou commandée, un mouvement d'entraînement ayant une caractéristique d'entraînement déterminée à l'avance en réglant l'amortissement du au moins un élément (10) d'amortissement, notamment en le déterminant en fonction de grandeurs d'entrée par des capteurs et/ou des récepteurs, notamment en fonction de la température, de la pression, de la tension et/ou du courant à l'aide d'une unité de commande.

15. Procédé suivant l'une des revendications précédentes,
**caractérisé en ce que**
une adaptation de la caractéristique d'entraînement s'effectue en temps réel par réglage de l'amortissement du au moins un élément (10) d'amortissement.
